# EUROPEAN PATENT SPECIFICATION

(11) **EP 1 892 219 B1**
(45) Date of publication and mention of the grant of the patent: **12.03.2008**
(21) Application number: 06116202.0
(22) Date of filing: 28.06.2006
(51) Int. Cl.: C01G 49/14, C01G 23/053, B01J 19/18

(54) **Method of treating a precipitate comprising iron(II)sulphate monohydrate, a plant, granular material and its uses**
Verfahren zur Behandlung eines Niederschlags enthaltend Eisen(II)sulfatmonohydrat, eine Anlage, granuliertes Material und seine Verwendung
Procédé de traitement d'un précipité comprenant du sulfate de fer (II) monohydraté, une installation, matériau granulaire et ses utilisations

(43) Date of publication of application: 27.02.2008
(73) Proprietor: KEMIRA PIGMENTS OY, 00180 Helsinki (FI)
(72) Inventor: Vuorisalo, Juhatuomas, 29600, Noormarkku (FI)
(74) Representative: Maskula, Silla Marjatta

(56) References cited:
- EP-A- 0 301 262
- WO-A-96/33133
- DE-B- 1 160 456

## Description

The invention relates to a method of treating a precipitate comprising iron(II)sulphate monohydrate originating from titanium dioxide production, in which method the reaction temperature is allowed to increase at the most to a temperature of 120°C, to a plant for treating a precipitate comprising iron(II)sulphate monohydrate, product and its uses, as described in the preambles of the enclosed independent claims.

Titanium dioxide is commonly manufactured by using a sulphate process, where an ore comprising titanium and iron is treated with sulphuric acid. In the first stage of the process, the ground ore is digested in concentrated sulphuric acid, whereby the titanium in the ore is converted to soluble titanyl sulphate.

The solid sulphate cake is then dissolved in weak sulphuric acid after which titanium containing liquor is purified and concentrated ready for hydrolyzation. The solid titanic acid precipitate is separated from acidic mother liquor by filtration.

The sulphuric acid based mother liquor, which is reused at digestion after concentration comprises dissolved iron and has an acid concentration of 20 - 25 %. The acid concentration comprises removal of iron and several concentration steps. The dissolved iron is first removed as ferrous sulphate heptahydrate, i.e. copperas, from the sulphuric acid by crystallisation followed by acid concentration with vacuum evaporators. After these steps the sulphuric acid obtains an acid concentration about 55 % and it typically comprises an insoluble first precipitate comprising ferrous sulphate monohydrate and about 20 weight-% of acid. This first precipitate is filtrated and separated from 55 % acid. After the removal of the first precipitate from 55 % acid, the remaining sulphuric acid is concentrated further, so that a sulphuric acid having an acid concentration of about 70 % is obtained. During this second concentration step a second precipitate is formed, comprising ferrous sulphate monohydrate and about 25 - 30 weight-% of acid. The second precipitate is also filtrated and thus separated from the 70 % acid. Both separated precipitates are nowadays mixed with lime for neutralisation and dumped. The amounts of waste that are created are enormous and the safe deposit of the created waste is problematic.

Cement is a combination of calcium, silicate, aluminium, iron and small amounts of other ingredients, which are mixed homogenously and ground to a suitable degree of coarseness. Cement typically comprises also small amounts of chromium(VI)compounds. Dissolved chromium(VI) is known to cause allergic reactions in humans and due to occupational safety the amount of Cr(VI) should be as low as possible. The amount of Cr(VI) can be minimised by reducing it to chromium(III). Chromium(III) is practically insoluble in water in the cement-water mixture, so it is harmless for the persons working with cement.

It is known to add dried ferrous sulphate heptahydrate to a dry cement mixture in order to reduce Cr(VI) to Cr(III). The use of dried ferrous sulphate heptahydrate has been problematic as it is dusting and it has a low melting point. Ferrous sulphate heptahydrate has also a tendency to absorb water, which causes difficulties in its handling and storage.

WO 96/33133 discloses a method for treating ferrous sulphate obtained as a side product from titanium dioxide manufacture in order to prepare ferrous sulphate monohydrate usable for chromium reduction in cement manufacture. In the method the acid containing ferrous sulphate is neutralised with a CaO containing material, the amount of the CaO containing material being such that a pH value from 1.5 to 5 is obtained for the end product. The reaction temperature is allowed to increase to at the most 120°C. Impure cement mixture comprising e.g. fly ash is used as the CaO containing material. One of the drawbacks is that the impurities in the cement reduce the amount of iron in the end product. When the end product is used as an additive in the cement industry, a large amount of additive is needed in order to reduce the Cr(VI) to the required level due to the low iron concentration. Also, the obtained end product is powdery and difficult to handle.

WO 2005/009917 discloses a method for producing a reducing agent for the soluble chromate in the cement. In the method a sulphuric acid from e.g. titanium dioxide manufacture is concentrated in order to obtain a precipitate containing iron(II)sulphate. The acid bound to the precipitate is minimised by washing away or whole or partial neutralisation. The removal of the acid requires expensive and complicated equipment. Furthermore, the neutralisation easily produces powdery material, which is difficult to handle. On the other hand, WO 2005/009917 proposes an addition of iron(II)sulphate heptahydrate to the washed or neutralised iron(II)sulphate monohydrate. However, this requires a long mixing time and leads probably to formation of a hard cake, which might need separate crushing step in order to obtain a product suitable to be used in the cement manufacture.

The object of the present invention is to solve or minimise the problems and disadvantages existing in the prior art.

One object of the present invention is to provide a simple method for treating a precipitate comprising iron(II)sulphate monohydrate originating from titanium dioxide production, so that amount of waste from the process is reduced.

Another object of the present invention is to provide a method, with which in a minimum amount of time a relatively homogenous material in granule form can be produced without extensive pre-treatment of the used raw materials.

Another object of the present invention is to provide a granular material that shows a high content of soluble iron and is suitable to be used as a reducing agent in the cement manufacture.

In order to achieve the above-mentioned objects the present invention is characterised in what is defined in the characterising parts of the independent claims presented hereafter.

In a method of producing granular material having a high soluble iron(II) content, the method comprises following steps:
- obtaining an amount of a crude precipitate comprising iron(II)sulphate monohydrate and sulphuric acid from titanium dioxide production,
- mixing the said precipitate and a neutralising agent in a mixing apparatus to obtain a reaction mixture, the temperature during mixing of the reaction mixture being allowed to increase at the most to a temperature of 120°C,
- mixing water to the reaction mixture in the same mixing apparatus, and
- keeping the amount of neutralising agent sufficient to give a pH value from 1.5 to 3 to the end product.

A plant according to the present invention for producing granular material having a high soluble iron(II) content and for treating a precipitate comprising ferrous sulphate monohydrate originating from titanium dioxide production, comprises
- a high shear rate mixing apparatus capable of mixing liquid, paste-like and solid material, having
   - a first feeding connection for precipitated ferrous sulphate monohydrate,
   - a second feeding connection for neutralising agent,
   - a third feeding connection for water and
   - an output connection,
- means for transporting the material from the output connection of the mixing apparatus and
- an after-cooler apparatus.

A typical product obtainable by the method according to the present invention has a iron(II) content of 14 - 18 % and comprises gypsum, the dusting value for the product fraction having a diameter in the range of 1 - 7 mm being lower than 1000 mg/kg.

The typical product according to the present invention is used in cleaning of effluent or sewage water, as a reducing agent in cement manufacture, or as flocculation agent.

Now it has been surprisingly found out that by adding water to the reaction mixture comprising neutralising agent and crude precipitate from titanium dioxide process and by carefully adjusting the pH it is possible to provide a fast and efficient method for producing granular material with high soluble iron(II) content. It has also been found out that it is not necessary to minimise the amount of acid in the ferrous sulphate monohydrate which is used as a raw material before the mixing operation. On the contrary, the acid in the crude ferrous sulphate monohydrate enhances the high level of soluble iron(II) compounds in the end product. At the same time the other physical properties, such as dusting value, of the granules are significantly improved.

When temperature is raised during the neutralisation of the acid in the crude precipitate, a granular product having high soluble iron(II) content is formed during the mixing action when water is added to the mixing apparatus. Thus the product is obtained fast and efficiently and no additional process steps are needed for minimisation of the acid in the crude precipitated ferrous sulphate monohydrate before the mixing action. There does not exist a need for prolonged drying of the obtained product or normally a need for separate granulation of the product, either.

After the formation of the granular material, the obtained product is cooled and screened or sieved in order to separate the main granule fraction having a diameter of 0.5 to 9 mm. It is also possible to recover a separate powdery material fraction. As a powdery material is here understood the material fraction that passes through 0.5 mm sieve. As granulous material or main granule fraction is here understood the main granule material fraction that does not pass 0.5 mm sieve. The main granule fraction comprises > 80 weight-% of the obtained material, typically > 85 weight-% of the produced material. Typically over 80 weight-% of the material comprises granules having a diameter more than 1 mm but less than 7 mm. Preferably the obtained main granule fraction of the obtained product is after screening or sieving appropriately packed for storage and transport. The powdery material fraction can be used as additive in manufacture of mortar.

In the present invention the mixing of the crude precipitated ferrous sulphate monohydrate, neutralising agent and water is conducted in one mixing apparatus. This means that mixing, neutralisation, drying and granulation all occur in one mixing apparatus and partially concurrently. The whole process takes typically a few minutes to perform, i.e. the end product with good physical properties, such as flow properties, is obtained in a few minutes from starting the mixing of the untreated raw materials.

According to one embodiment of the invention the reaction mixture comprises crude precipitated ferrous sulphate monohydrate typically 55 - 95 weight-%, more typically 60 - 80 weight-%, preferably 65 - 70 weight-%, and ferrous sulphate heptahydrate 1 - 35 weight-%, more typically 15 - 30 weight-%, preferably 20 - 25 weight-%. Crude precipitated ferrous sulphate monohydrate comprises typically 15 - 30 weight-% of sulphuric acid.

According to one especially preferred alternative crude precipitated ferrous sulphate monohydrate comprising sulphuric acid is unwashed, unreduced and unneutralised before its addition to the reaction or pre-reaction mixture. This means that it is not necessary to pre-treat the precipitate that is obtained from the titanium dioxide production, but it can be directly used for the manufacture of product according to the invention. This simplifies the plant configuration and saves production time when fewer production steps are needed. At the same time the presence of acid in the ferrous sulphate precipitate reduces the possibility of the conversion of the iron(II) into the iron(III) during the production of the end product.

Both precipitated ferrous sulphate monohydrate originating from the concentration step of 55 % sulphuric acid or 70 % sulphuric acid in the titanium dioxide production can be used in the invention. According to one embodiment of the invention the precipitated ferrous sulphate monohydrate originating from the concentration step of 55 % sulphuric acid is used, as the precipitate from 55 % acid concentration step comprises a lower amount of acid and a higher amount of iron(II) than ferrous sulphate monohydrate originating from the concentration step of 70 % sulphuric acid. Typically the precipitate from the concentration step of 55 % sulphuric acid comprises around 15 - 17 weight-% of iron(II) and 15 - 25 weight -% acid. Consequently the neutralisation of the precipitate from 55 % acid concentration step also reduces the amount of neutralising agent that is needed and reduces the reaction temperature. As the amount of acid is lower, a lower amount of neutralising agent is needed, leading to lower gypsum concentration in the end product and to higher iron(II) concentration. It is also possible to use a mixture of precipitates from different concentration steps. A typical proportion of the precipitated ferrous sulphate monohydrate originating from the concentration step of 55 % sulphuric acid to the precipitated ferrous sulphate monohydrate originating from the concentration step of 70 % sulphuric acid is 1:2 - 1:1. Typically the precipitate from the concentration step of 70 % sulphuric acid comprises around 13 - 15 weight-% of iron(II) and 25 - 30 weight -% acid.

According to the invention the neutralising agent is added to the ferrous sulphate monohydrate in such amount that the pH value is kept to a low level. The low pH promotes the high amount of soluble iron in the end product, as high pH value increases the conversion of iron(II) to iron(III), which is insoluble. Preferably the neutralising agent is added in an amount sufficient to give a pH value from 1.7 to 2 to the end product. Typically neutralising agent is added to the reaction mixture in amounts 5 - 15 weight-% of active neutralising agent, more typically 7 - 11 weight-%, most typically 8 - 10 weight-% of active neutralising agent. A potentiometric measurement can be used for determination of the pH value of the product in solution. Measurement can be done by weighing 15.0 g carefully mixed product into a 200 ml plastic vessel. Thereafter 150 ml deionised water is added and the mixture is mixed with a magnetic stirrer for 20 minutes. The stirrer is removed, particles are allowed to sediment and the pH is measured from the clarified water phase.

The neutralising agent which is used in the present invention is preferably a substance that forms gypsum under mixing of the reaction mixture. As gypsum is one of the "natural" constituents of cement mixture, this minimises the amount of foreign, unnecessary or harmful compounds that are introduced to cement when the end product is used as reducing agent in cement manufacture. Suitable neutralising agents are for example calcium hydroxide, dehydrated lime, calcium oxide, limestone, dolomite or their mixtures.

According to one preferred embodiment calcium or magnesium oxide is used as neutralising agent. Use of relatively pure calcium or magnesium oxide as neutralising agent enhances the amount of iron in the granules, as the use of relatively pure oxide minimises the amount of unnecessary or even harmful impurities in the obtained product. Thus a typical iron(II) content of 15 - 17.5 weight-% in the obtained end product is easily achieved, and the production of granules of uniform quality is improved. When pure oxides are used it is possible to use smaller amounts of neutralising agent, as the relatively pure oxides comprise smaller amounts of unreactive constituents, such as silicates or carbonates. Thus the neutralising agent reacts effectively in the process and improves the overall performance of the process. The neutralising agent may comprise 20 - ca 100 weight-% CaO, typically 70 - 95 weight-% CaO, more typically 80 - 90 weight-% CaO.

The reaction between the crude precipitate and the neutralising agent may be very violent and exothermic, enhancing the effective drying and granulation of the reaction mixture. During the drying of the reaction mixture significant amounts of steam are generated. The steam is preferably dispatched from the reaction apparatus.

When calcium oxide is used as neutralising agent the reaction temperature is high, usually around 105•C, which contributes to the high iron(II) content in the final product. When the reaction mixture reaches the temperature around 105•C it usually solidifies fast.

According to one embodiment of the invention reduced temperature around 65•C results in damp reaction mixture, which is formed into granules of irregular shape with a diameter of 3 - 10 mm.

Use of magnesium oxide as neutralising agent results in an end product with improved solubility properties. During the neutralisation reaction with magnesium oxide no insoluble gypsum is formed, which improves the overall characteristics of the end product for uses where high solubility is an asset and where gypsum itself is detrimental to the process, e.g. when the end product is used in water treatment and/or cleaning of effluents.

The water content of the crude precipitate may vary due to the process conditions in titanium dioxide production. According to the present invention the reaction mixture's moisture content can be adjusted by addition of water to the reaction mixture through a liquid feeding connection arranged in the mixing apparatus. For example, water can be added in amount of 10 weight-% to the reaction mixture before or after, preferably after the addition of the neutralising agent. To a certain extent the granulation of the reaction mixture can be regulated by the amount of the added water. If dry raw materials are used, the material obtained is powdery. In that case, granules can be obtained by adding a sufficient amount of water. Typically the added water content in the reaction mixture giving granular material is in the range of 0.1 - 20 weight-%, typically 5 - 15 weight-%, even more typically 7.5 - 11 weight-%. According to one embodiment of the invention a small amount of water, for example 1 - 3 weight-%, is added during the last mixing stage. This addition levels out the possible variations in the water content of the used raw materials, thus minimising the need of extensive process adjustment.

As explained above, by using the method according to the present invention it is possible to obtain dry hard granules in controlled manner. The present invention also enables the control and adjustment of the properties of the end product by proper selection of the different process parameters. Thus the end product can be, at least partially, tailored to fulfil the specific needs of the end application. Suitable process parameters that can be adjusted are, for example, the quality of the mixing, mixing time, proportions of different raw materials and properties of the used raw materials.

One of the important properties of the used raw material is their water or moisture content. By adjusting the water content in the reaction mixture it is possible to control the granule formation and thus the final form of the obtained product. If used raw materials have high water content, the reaction mixture is damp and the obtained end product is formed as soft and irregular granules. Medium water content in the reaction mixture leads to effective formation of dry and hard granules. If the used raw materials are practically dry the end product is in form of fine-grained powdery material.

According to one embodiment of the invention an amount of ferrous sulphate heptahydrate originating from titanium dioxide production is mixed with the said crude precipitate before or during the addition of the neutralisation agent, the amount of added heptahydrate being 1 - 35 weight-%. The ferrous sulphate heptahydrate can be added to crude precipitated ferrous sulphate monohydrate at the same time with the neutralising agent or before the addition of the neutralising agent. When temperature is raised during the neutralisation of the acid in the crude precipitate, ferrous sulphate heptahydrate is dried and looses its crystal waters.

According to one preferred embodiment of the present invention the crude precipitate comprising ferrous sulphate monohydrate is mixed together with ferrous sulphate heptahydrate in order to form a pre-reaction mixture before addition of the neutralising agent to the pre-reaction mixture obtained. Advantageously ferrous sulphate monohydrate and heptahydrate are first mixed mechanically together to form a pre-reaction mixture, which is in sludge or suspension form. When the pre-reaction mixture is in sludge or suspension form, the amount of neutralising agent added to the pre-reaction mixture can be reduced, as the mixing of sludge or suspension is easy and provides a homogenous mixing result. A more thorough homogenous mixing of the raw materials decreases the amount of neutralising agent needed, as there is no need for adding a surplus neutralising agent to compensate the poor mixing of the raw materials. At the same time the reaction temperature is reduced. The low reaction temperature reduces the oxidation of iron(II), thus ensuring high levels of soluble iron in the final product. The mixing of the pre-reaction mixture is conducted for a relatively short time, preferably for 20 seconds to 2 minutes.

If no separate pre-mixing is conducted when ferrous sulphate heptahydrate is used, precipitated ferrous sulphate monohydrate is added to the mixing apparatus together with ferrous sulphate heptahydrate. After this the neutralising agent is added to the mixing apparatus.

According to one embodiment of the present invention the wet precipitated ferrous sulphate heptahydrate is used without a drying step preceding the mixing of the reaction mixture, i.e. heptahydrate that is crystallised out of sulphuric acid in the titanium dioxide production can be used as such, without any additional drying steps after the filtration. No extra drying steps are needed, as the heat of the neutralisation reaction is enough to dry the product to a desired level. Furthermore, the addition of wet ferrous sulphate heptahydrate affects the granulation in a positive manner. The amount of moisture present in the wet ferrous sulphate heptahydrate can be used to adjust the granulation tendency of the reaction mixture. The granulation of the reaction mixture is improved when ferrous sulphate heptahydrate has high moisture content. Precipitated ferrous sulphate heptahydrate has typically moisture content in the range of 3 - 7 weight-%, more typically in the range of 4 - 6 weight-%. Often precipitated ferrous sulphate heptahydrate from acid concentration plant has an acid content up till 2 weight-%.

The mixing of the reaction mixture is preferably conducted by using a high shear rate mixing apparatus. The properties of the end product can be controlled by adjusting the mixing time. A longer mixing time influences the granule size by decreasing it. In other words, if an end product comprising granules with smaller diameter is needed, it would be advantageous to prolong the mixing time used.

Any high shear rate mixing apparatus that is suitable for mixing liquids, paste-like and dry materials can be used in the present invention. The inside of the mixing apparatus as well as the mixing arms and blades are manufactured of acid-resistant material. Preferably the mixing apparatus comprises a plurality of mixing blades arranged to one mixing arm. Typically the batch volume of the mixing apparatus is 500 - 3000 kg. A typical peripheral velocity during the mixing is >15 m/s, typically 12 - 18 m/s, sometimes even >18 m/s.

According to one embodiment of the present invention the mixing apparatus is an Eirich-mixer, preferably R-type Eirich-mixer, or a Lödige-mixer. Preferably a mixing apparatus operates on principle of the mechanically generated fluid bed. For example, the blades of the mixing apparatus can be arranged to rotate close to the inner wall of a horizontal, cylindrical drum of the mixing apparatus, whereby the materials to be mixed are thrown from the bed of product into the open mixing space. The mechanically generated fluid bed ensures intensive mixing in a short period of time.

According to one embodiment of the invention the mixing speed is typically 200 - 600 rpm, more typically 350 - 450 rpm. The mixing can be conducted so that the mixing speed is faster in the beginning of the mixing, for example 400 - 500 rpm, and slower in the end of mixing, for example 250 - 350 rpm. When an Eirich-mixer is used the mixing speed is typically at least 300 rpm, sometimes even up to 800 or 1000 rpm. After the addition of the neutralising agent the mixture is mixed for a few minutes, typically for 2 - 10 minutes. In some case it might be necessary to use higher mixing speed also in the end of the mixing, during so called final mixing.

If the reaction mixture after the addition of the neutralising agent is still too moist and/or have too large particle diameter, an additional dosage of neutralising agent can be added to the mixing apparatus. As concluded above, another or additional way to correct the properties of the reaction mixture is to increase the mixing time or mixing speed or both.

According to one embodiment of the invention the processing cycle of the reaction mixture is conducted for 7 - 30 min, preferably for 10 - 20 min. The processing cycle comprises the filling of the mixing apparatus with crude precipitate, mixing of the crude precipitate with the neutralising agent, neutralisation and terminal mixing, emptying the mixing apparatus and cooling of the obtained material. Typically the pre-mixing of the crude precipitate is conducted at the maximum for 1 min, the neutralisation reaction for a few minutes and the terminal mixing around 2 min. The duration of the pre-mixing may be very short, very typically only 20 - 30 seconds. Thus the typical processing cycle time is around 10 to 15 minutes. This enables four to six processing cycles per hour. It is of course possible to arrange the process and plant according to the present invention as continuous process. For example, many of the possible high shear rate mixing apparatuses can be run as continuous mixing apparatuses.

According to one embodiment of the invention the plant comprises plurality of high shear mixing apparatuses, which can be connected parallel or in series.

Due to the exothermic reactions that occur during the mixing phase the material coming out of the mixing apparatus is typically hot. The cooling of the end product is done in an after-cooler apparatus, such as drum-cooler. Preferably the after-cooler apparatus is a rotary drum. It can be used also as a granulation and/or finishing apparatus, as the rotating motion of the drum enhances the formation of granules with homogenous size distribution, and rounds off and hardens the granules to be cooled. It is also possible to arrange feeding connections for binding or coating agent(s) to the after-cooler apparatus.

According to preferred embodiment of the invention the mixing and granulation are done by using the same apparatus, i.e. the mixing apparatus functions also as a granulation apparatus. According to one embodiment of the invention, especially when the after-cooler apparatus is not a rotary drum, the plant can comprise a separate granulation apparatus, such as a rotary drum or the like. In that case the reaction mixture is removed from the mixing apparatus to the granulation apparatus after the reaction between the iron(II) sulphate monohydrate and heptahydrate and the neutralising agent has been completed. In case the after-cooler apparatus is a rotary drum, it can also function as a granulation apparatus. It is also possible to add binding and/or coating agents to the separate granulation apparatus through suitable feeding connections. The binding agents can e.g. be sprayed by using nozzles.

According one embodiment of the invention the plant also comprises means for dispatching the steam from the high shear mixing apparatus for removing the steam generated during the drying of the reaction mixture under mixing. The mixing apparatus may also comprise means for collecting dust or fine-grained material from the apparatus.

The plant according to present invention comprises preferably a classifier, such as sieve or screen, for separation of the obtained end product to different size fractions. The obtained end product is then stored, and typically transported as bulk material. Transportation may be conducted by using cargo ships, trucks or both. The plant may comprise also a packing apparatus for packing the obtained end product in a suitable manner for storage and transport. Sometimes the end product is packed in paper or plastic sacks.

By using the method and plant of the present invention it is easy to manufacture material both in granule or powder form by adjusting the moisture content of the reaction mixture. The present invention thus enables the production of granular material showing good iron(II) solubility, high iron(II) content, good flow properties and good storage life properties. The material obtained is furthermore relatively homogenous, i.e. the granules have narrow size distribution. Typically the soluble iron(II) content is 15 - 18 weight-%. The material is easy to dose due to its granule form, as the creation of dust is minimised during the handling of the product. It can be also blown and it does not melt during pumping..

When the end product is prepared in granulate form typically 75% of granules are of size > 0.5 mm, usually in the range of 1 - 10 mm. Granular material do not need to be of unitary size.

According to the invention the dusting value for the granule fraction having a diameter in the range of 1 - 7 mm is lower than 1000 mg/kg, typically lower than 500 mg/kg, sometimes lower than 400 mg/kg, and sometimes even about 300 mg/kg. Dusting values given here are obtained by placing 400 g of the end product into a column where they are kept fluidised by suction for 2 minutes. The dust that comes loose is collected on filter paper and weighted. The result is given as milligrams per one kilogram of the end product. This implies that the obtained end product is easy to handle as low levels of dust is generated. In practice, during normal storage, transport and usage the end product can be considered almost as dust free.

According to one embodiment of the invention the abrasion value for the granule fraction having a diameter in the range of 1 - 7 mm is less than 70 weight-%, usually 15 - 60 weight-%, typically around 25 weight-%. Abrasion values given here are obtained by placing 200 grams of end product granules and steel balls with diameter of 10 mm into a drum, which is rotated for 30 min. Abrasion value indicates the amount of particles that was ground during drum rotation due to the abrasion and shearing. Low abrasion value indicates that the obtained end product does not break apart during transportation and handling, for example when it is conveyed with mechanical conveyors.

According to one embodiment of the invention the bulk density value for the granule fraction having a diameter in the range of 1 - 7 mm is 2 - 1 kg/l, typically around 1.4 kg/l. The product shows thus good flowing properties when it is feed from a silo, and it is easy to feed to a cement kiln during the cement manufacture.

According to one embodiment of the invention the crushing strength value for the granule fraction having a diameter in the range of 1 - 7 mm is > 20 N, typically 30 - 150 N, more typically 80 - 120 N, quite often 90 - 105 N. Crushing strength values given here are obtained by measuring the strength in Newtons that is needed for crushing a particle of a certain size. The measurement is made for 30 individual particles and the result is given as the average of the individual values. Crushing strength is dependent on the size of the particle, generally larger particles are stronger than the small ones. The end product according to present invention shows an improved hardness that makes it suitable for use in e.g. cement manufacture. The product is easy to feed evenly, which improves the even distribution of the reducing iron(II) into the cement mixture. Normally the product is added in granule form to the cement mixture in a grinder or classifier after the grinder. The granules are ground into the cement mixture in the final grinding of the mixture.

All values given here are measured from well-mixed end product. The used experimental techniques for measuring crushing strength, abrasion and dusting are also described in handbook "Fertilizer Manual", published by International Fertilizer Development Center and United Nations Industrial Development Organization (3. edition).

The amount of acid in the end product is usually less than 5 weight-%, usually 0.1 - 3 weight-%, more typically 0.5 - 2 weight-%.

Material can be taken out from the mixing apparatus in powder form, having a mean particle size of 100 µm or under. This kind of material is preferred when the material is used as reducing agent cement factories where reducing agent is added directly to the cement in packing stage.

When used as a reducing agent in the cement manufacture the product according to the present invention can be dosed to the cement mixture in similar doses than known reducing agents.

The storage life of the product according to the present invention is at least as good, possibly even better than that of pure iron(II)sulphate. Especially when the product is in granule form it shows improved storage properties.

The granular material according to the present invention can also be used for cleaning of effluent waters, especially of effluent waters comprising high amounts Cr(VI). The granular material can be used also as flocculation agents in sewage treatment plants instead of the sulphate heptahydrate.

### EXAMPLES

In the following examples 1 to 6 the pre-mixing time was varied from 30 seconds to about 1 minute. After the addition of the neutralisation agent mixing was continued for 4 - 5 minutes. The mixing rate was about 350 - 500 rpm.

### Example 1

Precipitated iron(II) sulphate monohydrate from 55 % acid concentration step and iron(II) sulphate heptahydrate were mixed in proportion 2:1. Calcium oxide was added in amount of 105 g/(kg precipitated iron(II) sulphate monohydrate), resulting a pH 2.0 - 2.1 and a reaction temperature circa 100°C. The end product was in granulate form, showing an iron(II) content of 17 - 18 weight-%.

### Example 2

Precipitated iron(II) sulphate monohydrate from 70 % acid concentration step and iron(II) sulphate heptahydrate were mixed in proportion 3:1. Calcium oxide was added in amount of 166 g/(kg precipitated iron(II) sulphate monohydrate), resulting a pH 2.0 - 2.1 and a reaction temperature of 110 - 120°C. The end product was in form of small granulates, which showed an iron(II) content of 13,5 -14 weight-%.

### Example 3

Precipitated iron(II) sulphate monohydrate from 55 % acid concentration step, precipitated iron(II) sulphate monohydrate from 70 % acid concentration step and iron(II) sulphate heptahydrate were mixed in proportion 35:35:30. Calcium oxide was added in amount of 133 g/(kg precipitated iron(II) sulphate monohydrate), resulting a pH 2.0 - 2.1 and a reaction temperature of 80 - 90°C. The end product was in form of small granulates, which showed an iron(II) content of 15 - 16 weight-%.

### Example 4

Precipitated iron(II) sulphate monohydrate from 70 % acid concentration step and iron(II) sulphate heptahydrate were mixed in proportion 4:1. Calcium oxide was added in amount of 166.3 g/(kg precipitated iron(II) sulphate monohydrate), resulting a pH 2.0 - 2.1 and a reaction temperature of 110 - 120°C. The end product was in form of fine powder, which showed an iron(II) content of 13.5 - 14 weight-%.

### Example 5

Precipitated iron(II) sulphate monohydrate from 55 % acid concentration step and iron(II) sulphate heptahydrate were mixed in proportion 4:1. Calcium oxide was added in amount of 94 - 95 g/(kg precipitated iron(II) sulphate monohydrate), resulting a pH 2.0 - 2.1 and a reaction temperature of 90 - 100°C. The end product was in form of fine powder, which showed an iron(II) content of 17.5 - 18.3 weight-%.

### Example 6

Precipitated iron(II) sulphate monohydrate from 55 % acid concentration step, precipitated iron(II) sulphate monohydrate from 70 % acid concentration step and iron(II) sulphate heptahydrate were mixed in proportion 52:26:20. Calcium oxide was added in amount of 123 - 124 g/(kg precipitated iron(II) sulphate monohydrate), resulting a pH 2.0 - 2.2 and a reaction temperature of 80 - 90°C. The end product was in powderous form, showing an iron(II) content of 15.3 weight-%.

### Example 7

84 kg precipitated iron(II) sulphate monohydrate and 21.5 kg iron(II) sulphate heptahydrate were added to the mixing apparatus. Before starting of the pre-mixing, 4.5 kg water was added to the mixing apparatus. The pre-mixing took approximately 30 seconds.

After the pre-mixing step 6.0 kg calcium oxide was added in the beginning of the actual mixing procedure with a screw feeder directly to the mixing apparatus. Reaction mixture was the mixed for approximately 5 minutes, after which the obtained material was emptied on a conveyor.

The obtained material was transported to a cooling drum, after which the material is screened to three different fractions. The finest fraction was taken to a silo from which it could be recycled back to the process if needed, the product fraction was directly prepared for transport and/or storage and the third, coarsest fraction was packed in sacks.

### Example 8

Crude precipitate was fed to a continuously operated mixing apparatus with a speed of 1000 kg/h. Finely comminuted CaO and water were fed to the same mixing apparatus with speeds of 120 kg/h and approximately 120 kg/h, respectively. The residence time in the mixing apparatus was 2 - 3 minutes. Granular material was obtained, the temperature on the granulates being 100 - 110 °C when they were exited from the mixing apparatus. The evaporation of the water continued after the granular material was exited from the mixing apparatus.

The mixing apparatus was a ploughshare intensive mixer equipped with two choppers. The volume of the used mixer was 300 dm³. The speed of rotation for the main mixer axis was 130 1/min and for the choppers 3000 1/min. Approximately 500 kg of granulous material was produced under 30 minutes test operation.

The granular material obtained was analysed for iron content and pH. Fe(II) content was 15 weight-% and Fe(III) content was 0.1 weight-%. Measurement for pH was carried out in 10 % Fe-solution and the value obtained was 3.8.

It was concluded that it was possible to use continuously operating mixing apparatus for converting the crude precipitate into easily soluble granulous material with high Fe(II) content.

## Claims

1. Method of producing granular material having a high soluble iron(II) content, the method comprising following steps:
- obtaining an amount of a crude precipitate comprising iron(II)sulphate monohydrate and sulphuric acid from titanium dioxide production,
- mixing the said precipitate and a neutralising agent in a mixing apparatus to obtain a reaction mixture, the temperature during mixing of the reaction mixture being allowed to increase at the most to a temperature of 120°C.
**characterised in**
- mixing water to the reaction mixture in the same mixing apparatus, and
- keeping the amount of neutralising agent sufficient to give a pH value from 1.5 to 3 to the end product.

2. Method according to claim 1, **characterised in that** the reaction mixture comprises 55 - 95 weight-% of crude precipitate comprising iron(II) sulphate monohydrate.

3. Method according to claim 1 or 2, **characterised in** adding water to the reaction mixture in amount of 0.1 - 20 weight-%, typically 5 - 15 weight-%.

4. Method according to any of the claims 1 - 3, **characterised in that** an amount of ferrous sulphate heptahydrate originating from titanium dioxide production is mixed with the said crude precipitate before or during the addition of the neutralisation agent, the amount of added heptahydrate being 1 - 35 weight-%.

5. Method according to claim 4, **characterised in that** the said crude precipitate and ferrous sulphate heptahydrate are mixed together in order to form a pre-reaction mixture before the addition of the neutralising agent.

6. Method according to claim 5, **characterised in that** the mixing of the pre-reaction mixture is conducted for 20 seconds to 2 minutes.

7. Method according to any of the preceding claims, **characterised in that** crude precipitate comprising iron(II) sulphate monohydrate and sulphuric acid is unwashed, unreduced and unneutralised before its addition to the reaction or pre-reaction mixture.

8. Method according to claim 1, **characterised in that** the said crude precipitate is obtained from the concentration step of 55 % sulphuric acid in the titanium dioxide production.

9. Method according to claim 6, **characterised in that** the proportion of the crude precipitate originating from the concentration step of 55 % sulphuric acid to the crude precipitate originating from the concentration step of 70 % sulphuric acid is 1:2 - 1:1.

10. Method according to claim 1, **characterised in** adding the neutralising agent in an amount sufficient to give a pH value from 1.7 to 2 to the end product.

11. Method according to claim 1, **characterised in** using a neutralising agent that forms gypsum under mixing of the reaction mixture.

12. Method according to claim 9, **characterised in** using calcium hydroxide, dehydrated lime, calcium oxide, limestone or dolomite, preferably calcium of magnesium oxide as the neutralising agent.

13. Method according to claim 1, **characterised** the processing cycle of the reaction mixture is conducted for 7 - 30 min, preferably for 10 - 20 min.

14. Plant for producing granular material having a high soluble iron(II) content and treating a precipitate comprising ferrous sulphate monohydrate originating from titanium dioxide production, comprising
- at least one high shear rate mixing apparatus capable of mixing liquid, paste-like and solid material, having
- a first feeding connection for precipitated ferrous sulphate monohydrate,
- a second feeding connection for neutralising agent,
- a third feeding connection for water and
- an output connection.
- means for transporting the material from the output connection of the mixing apparatus,
- an after-cooler apparatus.

15. Plant according to claim 14 **characterised in that** the after-cooler is a drum-cooler.

16. Plant according to claim 14 **characterised in that** it comprises a separate granulation apparatus.

17. Product obtainable by the method according to any of the claims 1 - 13, having a iron(II) content of 14 - 18 % and comprising gypsum,
**characterised in that**
the dusting value for the product fraction having a diameter in the range of 1 - 7 mm is lower than 1000 mg/kg.

18. Product according to claim 17, **characterised in that** it comprises granular material, where 75% of the granules are of size > 0.5 mm, preferably in the range of 1 - 10 mm.

19. Product according to claim 17 or 18, **characterised in that** the abrasion value for the granule fraction having a diameter in the range of 1 - 7 mm is less than 70 %.

20. Product according to claims 17 to 19, **characterised in that** the bulk density value for the granule fraction having a diameter in the range of 1 - 7 mm is 2 - 1 kg/l.

21. Use of the product according to any of the claims 18 - 19 in cleaning of effluent or sewage water.

22. Use of the product according to any of the claims 18 - 19 as a reducing agent in cement manufacture.

23. Use of the product according to any of the claims 18 - 19 as flocculation agent.

## Patentansprüche

1. Verfahren zur Herstellung von granulärem Material mit einem hochlöslichen Eisen(II)-Gehalt, wobei das Verfahren die folgenden Schritte umfasst:
- Erhalten einer Menge eines Rohniederschlags, umfassend Eisen(II)-Sulfat-Monohydrat und Schwefelsäure aus der Titandioxidproduktion,
- Vermischen des genannten Niederschlags und eines Neutralisierungsmittels in einer Mischapparatur, wobei eine Reaktionsmischung erhalten wird, wobei es ermöglicht wird, dass die Temperatur während des Mischens der Reaktionsmischung bis zu einer Temperatur von maximal 120°C ansteigen kann,
**dadurch charakterisiert, dass**
- der Reaktionsmischung in der gleichen Mischapparatur Wasser zugemischt wird, und
- dass die Menge des Neutralisierungsmittels so gehalten wird, dass sie ausreicht, um einen pH-Wert von 1,5 bis 3 beim Endprodukt zu ergeben.

2. Verfahren gemäß Anspruch 1, **dadurch charakterisiert, dass** die Reaktionsmischung 55-95 Gew.-% Rohniederschlag, umfassend Eisen(II)-Sulfat-Monohydrat, umfasst.

3. Verfahren gemäß Anspruch 1 oder 2, **dadurch charakterisiert,** dass Wasser zu der Reaktionsmischung in einer Menge von 0,1-20 Gew.-%, typischerweise 5-15 Gew.-% gegeben wird.

4. Verfahren gemäß einem der beliebigen der Ansprüche 1 bis 3, **dadurch charakterisiert, dass** eine Menge Eisen(II)-Sulfat-Heptahydrat, die aus der Titandioxidproduktion stammt, mit dem genannten Rohniederschlag vor oder während der Zugabe des Neutralisierungsmittels gemischt wird, wobei die Menge an zugegebenen Heptahydrat 1-35 Gew.-% beträgt.

5. Verfahren gemäß Anspruch 4, **dadurch charakterisiert, dass** der genannte Rohniederschlag und das Eisen(II)-Sulfat-Heptahydrat zusammengemischt werden, um eine Vorreaktionsmischung vor der Zugabe des Neutralisierungsmittels zu bilden.

6. Verfahren gemäß Anspruch 5, **dadurch charakterisiert, dass** das Mischen der Vorreaktionsmischung für 20 Sekunden bis 2 Minuten ausgeführt wird.

7. Verfahren gemäß einem beliebigen der vorstehenden Ansprüche, **dadurch charakterisiert, dass** der Rohniederschlag, der Eisen(II)-Sulfat-Monohydrat und Schwefelsäure umfasst, vor seiner Zugabe zur Reaktions- oder Vorreaktionsmischung nicht gewaschen, nicht reduziert und nicht neutralisiert wird.

8. Verfahren gemäß Anspruch 1, **dadurch charakterisiert, dass** der genannte Rohniederschlag aus dem 55%-Schwefelsäure-Konzentrationsschritt der Titandioxidproduktion erhalten wird.

9. Verfahren gemäß Anspruch 6, **dadurch charakterisiert, dass** das Verhältnis des Rohniederschlage, der aus dem 55%-Schwefelsäure-Konzentrationsschritt stammt, zum Rohniederschlag, der aus dem 70%-Schwefelsäure-Konzentrationsschritt stammt, 1:2-1:1 beträgt.

10. Verfahren gemäß Anspruch 1, **dadurch charakterisiert, dass** das Neutralisierungsmittel in einer Menge, die ausreicht, um einen pH-Wert von 1,7 bis 2 beim Endprodukt zu ergeben, zugegeben wird.

11. Verfahren gemäß Anspruch 1, **dadurch charakterisiert, dass** ein Neutralisierungsmittel verwendet wird, das Gips beim Mischen der Reaktionsmischung ergibt.

12. Verfahren gemäß Anspruch 9, **dadurch charakterisiert, dass** Calciumhydroxid, Branntkalk, Calciumoxid, Kalkstein oder Dolomit, vorzugsweise Calcium- oder Magnesiumoxid als das Neutralisierungsmittel verwendet werden.

13. Verfahren gemäß Anspruch 1, **dadurch charakterisiert, dass** der Bearbeitungszyklus der Reaktionsmischung 7-30 min, vorzugsweise 10-20 min ausgeführt wird.

14. Anlage zur Herstellung von granulärem Material mit hochlöslichem Eisen(II)-Gehalt und zur Behandlung eines Niederschlags, umfassend Eisen(II)-Sulfat-Monohydrat, das aus der Titandioxidproduktion stammt, umfassend
- mindestens eine Mischapparatur mit hoher Scherrate, die in der Lage ist, flüssiges, pastenartiges und festes Material zu mischen, und die aufweist:
- eine erste Einspeisungsverbindung für gefälltes Eisen(II)-Sulfat-Monohydrat,
- eine zweite Einspeisungsverbindung für das Neutralisierungsmittel,
- eine dritte Einspeisungsverbindung für Wasser und
- eine Auslassverbindung,
- Einrichtungen zum Transport des Materials von der Auslassverbindung zur Mischapparatur,
- eine Nachkühlerapparatur.

15. Anlage gemäß Anspruch 14, **dadurch charakterisiert, dass** der Nachkühler ein Trommelkühler ist.

16. Anlage gemäß Anspruch 14, **dadurch charakterisiert, dass** sie eine separate Granulierungsapparatur umfasst.

17. Produkt, erhältlich durch das Verfahren gemäß einem beliebigen der Ansprüche 1 bis 13, mit einem Eisen(II)-Gehalt von 14-18%, und das Gips umfasst,
**dadurch charakterisiert, dass**
der Staubwert für die Produktfraktion mit einem Durchmesser im Bereich von 1-7 mm geringer ist als 1000 mg/kg.

18. Produkt gemäß Anspruch 17, **dadurch charakterisiert, dass** es granuläres Material umfasst, wobei 75% des Granulats die Größe > 0,5 mm, vorzugsweise im Bereich von 1-10 mm, aufweisen.

19. Produkt gemäß Anspruch 17 oder 18, **dadurch charakterisiert, dass** der Abriebswert für die Kornfraktion mit einem Durchmesser im Bereich von 1-7 mm weniger als 70% beträgt.

20. Produkt gemäß den Ansprüchen 17 bis 19, **dadurch charakterisiert, dass** der Wert für die Schüttdichte für die Kornfraktion mit einem Durchmesser im Bereich von 1-7 mm 2-1 kg/l beträgt.

21. Verwendung des Produkts gemäß einem beliebigen der Ansprüche is bis 19 bei der Reinigung von Abwasser oder Schmutzwasser.

22. Verwendung des Produkts gemäß einem beliebigen der Ansprüche 18 bis 19 als Reduktionsmittel bei der Zementherstellung.

23. Verwendung des Produkts gemäß einem beliebigen der Ansprüche 18 bis 19 als Flockungsmittel.

## Revendications

1. Procédé de production d'une matière granulaire ayant une teneur élevée en fer (II) soluble le procédé comprenant les étapes suivantes :
- obtenir une quantité de précipité brut comprenant du sulfate de fer (II) monohydrate et de l'acide sulfurique provenant de la production de dioxyde de titane,
- mélanger ledit précipité et un agent neutralisant dans un dispositif mélangeur pour obtenir un mélange réactionnel, la température pendant le mélange du mélange réactionnel pouvant augmenter au maximum jusqu'à une température de 120°C,
**caractérisé par**
- l'addition d'eau au mélange réactionnel dans le même dispositif mélangeur, et
- le maintien d'une quantité d'agent neutralisant suffisante pour donner une valeur de pH de 1,5 à 3 au produit final.

2. Procédé selon la revendication 1, **caractérisé en ce que** le mélange réactionnel comprend de 55% à 95% en masse de précipité brut comprenant du sulfate de fer (II) monohydrate.

3. Procédé selon la revendication 1 ou 2, **caractérisé par** l'addition d'eau au mélange réactionnel en une quantité de 0,1% à 20% en masse, généralement de 5% à 15% en masse.

4. Procédé selon l'une quelconque des revendications 1 à 3, **caractérisé en ce qu'**une quantité de sulfate ferreux heptahydrate provenant de la production de dioxyde de titane est mélangée avec ledit précipité brut avant ou pendant l'addition de l'agent neutralisant, la quantité d'heptahydrate ajouté étant de 1% à 35% en masse.

5. Procédé selon la revendication 4, **caractérisé en ce que** ledit précipité brut et le sulfate ferreux heptahydrate sont mélangés ensemble pour former un mélange pré-réactionnel avant l'addition de l'agent neutralisant.

6. Procédé selon la revendication 5, **caractérisé en ce que** le mélange du mélange pré-réactionnel est réalisé pendant 20 secondes à 2 minutes.

7. Procédé selon l'une quelconque des revendications précédentes, **caractérisé en ce que** le précipité brut comprenant le sulfate de fer (II) monohydrate et l'acide sulfurique n'est ni lavé, ni réduit, ni neutralisé avant son addition au mélange réactionnel ou au mélange pré-réactionnel.

8. Procédé selon la revendication 1, **caractérisé en ce que** ledit précipité brut est obtenu à partir de l'étape de concentration de l'acide sulfurique à 55% dans la production de dioxyde de titane.

9. Procédé selon la revendication 6, **caractérise en ce que** la proportion de précipité brut provenant de l'étape de concentration de l'acide sulfurique à 55% dans le précipité brut provenant de l'étape de concentration de l'acide sulfurique à 70% est de 1:2 à 1:1.

10. Procédé selon la revendication 1, **caractérisé par** l'addition de l'agent neutralisant en une quantité suffisante pour donner une valeur de pH de 1,7 à 2 au produit final.

11. Procédé selon la revendication 1, **caractérisé par** l'utilisation d'un agent neutralisant qui forme du gypse lorsque le mélange réactionnel est mélangé.

12. Procédé selon la revendication 9, **caractérise par** l'utilisation d'hydroxyde de calcium, de chaux déshydratée, d'oxyde de calcium, de calcaire ou de dolomite, de préférence d'oxyde de magnésium ou de calcium en tant qu'agent neutralisant.

13. Procédé selon la revendication 1, **caractérisé en ce que** le cycle de traitement du mélange réactionnel est réalisé pendant 7 à 30 min, de préférence pendant 10 à 20 min.

14. Installation permettant de produire une matière granulaire ayant une teneur élevée en fer (II) soluble et de traiter un précipité comprenant du sulfate ferreux monohydrate provenant de la production de dioxyde de titane, comprenant ;
- au moins un dispositif mélangeur à vitesse de cisaillement élevée capable de mélanger un liquide, une matière analogue à une pâte et une matière solide, comportant
- une première connexion d'alimentation pour le sulfate ferreux monohydrate précipité,
- une deuxième connexion d'alimentation pour l'agent neutralisant,
- une troisième connexion d'alimentation pour l'eau, et
- une connexion de sortie,
- des moyens permettant de transporter la matière depuis la connexion de sortie du dispositif mélangeur,
- un dispositif post-refroidisseur.

15. Installation selon la revendication 14, **caractérisée en ce que** le dispositif post-refrodisseur est un refroidisseur à tambour.

16. Installation selon la revendication 14, **caractérisée en ce qu**'elle comprend un dispositif de granulation séparé.

17. Produit pouvant être obtenu an moyen du procédé selon l'une quelconque des revendications 1 à 13, ayant une teneur en fer (II) de 14% à 18% et comprenant du gypse,
**caractérisé en ce que**
la valeur d'empoussièrement pour la fraction de produit ayant un diamètre dans la gamme de 1 à 7 mm est inférieure à 1 000 mg/kg.

18. Produit selon la revendication 17, **caractérisé en ce qu'**il comprend une matière granulaire, dans laquelle 75% des granulés ont une taille > 0,5 mm, et de préférence dans la gamme de 1 à 10 mm.

19. Produit selon la revendication 17 ou 18, **caractérisé en ce que** la valeur d'abrasion pour la fraction de granulé ayant un diamètre la gamme de 1 à 7 mm est inférieure à 70%.

20. Produit selon la revendication 17 à 19. **caractérisé en ce que** la valeur de la masse volumique apparente pour la fraction de granulé ayant un diamètre dans la gamme de 1 à 7 mm est de 2 à 1 kg/L.

21. Utilisation du produit selon l'une quelconque des revendications 18 à 19, pour le nettoyage de l'eau d'effluent ou usée.

22. Utilisation du produit selon l'une quelconque des revendications 18 à 19 en tant qu'agent réducteur dans la fabrication de ciment.

23. Utilisation du produit selon l'une quelconque des revendications 18 à 19 en tant qu'agent de floculation.
